# EUROPÄISCHE PATENTSCHRIFT

(11) **EP 3 351 450 B1**
(45) Veröffentlichungstag und Bekanntmachung des Hinweises auf die Patenterteilung: **03.11.2021**
(21) Anmeldenummer: 18154738.1
(22) Anmeldetag: 24.03.2015
(51) Int. Cl.: B60W 30/06, B60W 40/105, B60W 40/10, B60W 30/02

(54) **VERFAHREN UND FAHRERASSISTENZSYSTEM ZUR ERMITTLUNG FAHRDYNAMISCHER ZUSTÄNDE EINES NUTZFAHRZEUGS**
METHOD AND DRIVER ASSISTANCE SYSTEM FOR DETERMINING DYNAMIC DRIVING STATES IN A COMMERCIAL VEHICLE
PROCÉDÉ ET SYSTÈME D'ASSISTANCE À LA CONDUITE DESTINÉS À DÉTECTER DES ÉTATS DYNAMIQUES D'UN VÉHICULE UTILITAIRE

(30) Priorität: 27.05.2014 DE 102014007900
(43) Veröffentlichungstag der Anmeldung: 25.07.2018
(62) Teilanmeldung aus: 15000865.4
(73) Patentinhaber: MAN Truck & Bus SE, 80995 München (DE)
(72) Erfinder: Römersperger, Xaver, 84034 Landshut (DE); Dörner, Karlheinz, 85757 Karlsfeld (DE); Schwertberger, Walter, 82278 Althegnenberg (DE); Kraus, Sven, 82140 Olching (DE); Reule, Michael, 80939 München (DE)
(74) Vertreter: Liebl, Thomas

(56) Entgegenhaltungen:
- WO-A1-2004/109326
- WO-A1-2008/064892
- DE-A1-102009 055 776

## Beschreibung

Die Erfindung betrifft ein Verfahren nach dem Oberbegriff des Anspruches 1 und ein Fahrerassistenzsystem zur Ermittlung fahrdynamischer Zustände eines Nutzfahrzeugs nach dem Oberbegriff des Anspruches 4.

Informationen zu fahrdynamischen Zuständen eines Nutzfahrzeugs, insbesondere eines Nutzfahrzeuggespanns aus Zugfahrzeug und Anhänger/Auflieger sind wichtige Parameter für einen funktionellen und sicheren Fahrbetrieb. Solche Informationen können in Verbindung mit Fahrerassistenzsystemen einem Fahrer angezeigt und/oder für einen unmittelbaren selbsttätigen Eingriff in die Fahrdynamik verwendet werden.

Es ist allgemein bekannt fahrdynamische Zustände, wie zum Beispiel einen relativen Gierwinkel (Knickwinkel) zwischen Zugfahrzeug und Anhänger/Auflieger eines Gespanns oder einen Wankwinkel eines Anhängers/Aufliegers oder einen Fahrzeugstillstand mittels speziell ausgebildeter und angeordneter Sensoren zur ermitteln. Dies ist meist aufwendig und kostenintensiv.

Aus der WO 2004/109326 A1 ist ein gattungsgemäße Vorrichtung sowie ein Verfahren zur Ermittlung einer räumlichen Ausrichtung eines Aufliegers oder Anhängers bekannt. Aus der WO 2008/064892 A1 ist ein Verfahren zum Bestimmen einer Position bekannt. Aus der DE 10 2009 055776 A1 ist ein Verfahren zum Schätzen des Rollwinkels in einem fahrenden Fahrzeug bekannt.

Aufgabe der Erfindung ist, ein Verfahren und ein Fahrerassistenzsystem vorzuschlagen, mit dem fahrdynamische Informationen über das Nutzfahrzeug relativ einfach, sicher und kostengünstig erhalten werden können.

Die Aufgabe ist durch die Merkmale des Anspruches 1 und durch die Merkmale des nebengeordneten Anspruches 4 gelöst. Bevorzugte Weiterbildungen der Erfindung sind in den abhängigen Ansprüchen gelöst

Erfindungsgemäß wird aus dem Kamerabild wenigstens einer, insbesondere in Fahrzeug-Längsrichtung ausgerichteten, Kamera des Nutzfahrzeugs mittels einer Bildverarbeitungsvorrichtung wenigstens eine fahrdynamische Informationen über das Nutzfahrzeug, insbesondere über einen Anhänger/Auflieger und/oder ein Zugfahrzeug eines Nutzfahrzeug-Gespanns, extrahiert.

Zweckmäßig sind dazu eine oder mehrere Kameras am Zugfahrzeug eines Nutzfahrzeuggespanns so angebracht, dass ein Anhänger/Auflieger zumindest in wenigstens einem Teil der möglichen Fahrstellungen zumindest teilweise im Bild erfasst wird. Solche Kameras sind beispielsweise als Bestandteil von Rangier-Assistenzsystemen ohnehin häufig an Nutzfahrzeugen angeordnet und können damit in einer weiteren Funktion für die erfindungsgemäße Ermittlung fahrdynamischer Zustände kostengünstig genutzt werden, indem Videobildmaterial hinsichtlich seines fahrdynamischen Informationsgehalts ausgewertet wird. Des Weiteren ist die Begrifflichkeit Kamera hier ausdrücklich in einem weiten Sinn zu verstehen, so dass die Kamera als jegliche Art von Bild-Erfassungseinrichtung ausgebildet sein kann, mittels der Bilder erfasst werden können.

Der relative Gierwinkel, auch Knickwinkel genannt, zwischen Zugfahrzeug und Anhänger/Auflieger eines Nutzfahrzeug-Gespanns ist eine maßgebliche Information eines fahrdynamischen Zustands im Fahrbetrieb. Erfindungsgemäß kann der relative Gierwinkel dadurch ermittelt werden, dass eine, in Fahrzeug-Längsrichtung gesehen, vordere, vertikale Außenkante eines Anhängers/Aufliegers von mindestens einer je Fahrzeugseite, in Fahrzeug-Längsrichtung gesehen, nach hinten gerichteten Kamera erkannt und erfasst wird. Bei einer längs ausgerichteten Gespannstellung ist der Gierwinkel 0. Wenn jedoch beispielsweise bei einer Kurvenfahrt ein relativer Gierwinkel als Knickwinkel zwischen Zugfahrzeug und Anhänger/Auflieger auftritt, verschiebt sich die aktuelle Kantenposition der vorderen Außenkante bezüglich der Kantenposition bei einer längs ausgerichteten Gespannstellung. Die Größe einer solchen Verschiebungsstrecke kann durch Auswertung des Kamerabildes ermittelt werden. Aus der jeweils aktuellen Kantenposition bzw. der Größe der Verschiebungsstrecke sowie unveränderlichen geometrischen Werten, insbesondere der Lage des Anhänger/Auflieger-Drehpunkts und der Anhänger/Auflieger-Breite, kann dann der relative Gierwinkel einfach, beispielsweise durch trigonometrische Beziehungen berechnet werden.

Vorteilhaft kann somit der jeweils aktuelle relative Gierwinkel schnell, einfach und funktionssicher berechnet werden und als Gierwinkelwert in einem Fahrerassistenzsystem einem Fahrer unmittelbar angezeigt und/oder für Fahrstabilisierungsmaßnahmen verwendet werden.

Anstelle einer Kantendetektion einer, in Fahrzeug-Längsrichtung gesehen, vorderen vertikalen Außenkante kann der relative Gierwinkel als Knickwinkel auch durch eine Kantendetektion einer, in Fahrzeug-Längsrichtung gesehen, hinteren vertikalen Außenkante in ähnlicher Weise ermittelt werden. Auch hier kann somit aus der Abweichung der aktuellen Kantenposition von der Kantenposition bei einem längs ausgerichteten Gespann bei Kenntnis der unveränderlichen Lage des Anhänger/Auflieger-Drehpunkts sowie der Abmessungen, insbesondere der Länge und Breite des Anhängers/Aufliegers in Verbindung mit der Kameraposition der relative Gierwinkel als Knickwinkel berechnet werden.

Beide Verfahren können gegebenenfalls kombiniert werden, so dass die Ermittlung des relativen Gierwinkels durch die Detektion der Positionen der Vorder- und Hinterkante des Anhängers/Aufliegers erfolgt. Damit können gegebenenfalls die Messgenauigkeit gesteigert und eine Redundanz für eine sichere Erfassung hergestellt werden.

Auch der relative Wankwinkel eines Anhängers/Aufliegers, das heißt seine seitliche Neigung bezüglich einer Lotsenkrechten zur Bodenebene ist eine fahrdynamisch wesentliche Information. Zur Ermittlung des relativen Wankwinkels wird ebenfalls das Videobildmaterial geeignet ausgewertet: dazu wird eine, in Fahrzeug-Längsrichtung gesehen, hintere und/oder vordere vertikale Außenkante eines Anhängers/Aufliegers von mindestens einer je Fahrzeugseite, in Fahrzeug-Längsrichtung gesehen, nach hinten gerichteten Kamera erfasst und eine Lotsenkrechte zur Bodenebene bestimmt. Mit einer Winkelauswertung wird der aktuelle relative Wankwinkel als Winkel zwischen der Lotsenkrechten und der hinteren und/oder vorderen vertikalen Außenkante des Anhängers/Aufliegers ermittelt. Der damit erhaltene Wankwinkelwert wird dann für eine weitere Verarbeitung in einem Fahrerassistenzsystem für eine Anzeige oder einen korrigierenden Eingriff verwendet. Die Lage der Lotsenkrechten zur Bodenebene kann aus einer bekannten Einbauposition und Ausrichtung einer am Zugfahrzeug, insbesondere am Fahrerhaus angeordneten Kamera bestimmt werden, wobei gegebenenfalls ein Wanken des Fahrerhauses festgestellt und korrigierend berücksichtigt wird. Alternativ oder zusätzlich kann die Bodenebene und damit eine zugeordnete Lotsenkrechte auch beispielsweise mittels einer Stereokamera und/oder einer Monokamera und geeigneten Bildverarbeitungsalgorithmen bestimmt werden.

Nach dem Stand der Technik können in allgemein bekannter Weise die Fahrgeschwindigkeit und der Stillstand eines Nutzfahrzeugs, insbesondere eines Nutzfahrzeug-Gespanns relativ kostengünstig mittels Drehzahlsensoren bestimmt werden. Nachteilig funktionieren aber diese Sensoren nicht bis zum völligen Stillstand sondern nur bis zu einer unteren Geschwindigkeitsgrenze, so dass ein sehr langsames Wegrollen des Fahrzeugs nicht sicher detektiert wird. Nachteilig kann auch die Drehrichtung und somit die Fahrtrichtung eines langsam wegrollenden Fahrzeugs nicht mit solchen Drehzahlsensoren bestimmt werden.

Daher wird vorgeschlagen, aus einem Kamerabild mittels der Bildverarbeitungsvorrichtung, zum Beispiel aus einem optischen Fluss eine Relativbewegung oder einen Stillstand zwischen dem Nutzfahrzeug-Gespann und einem erfassten Hintergrund, insbesondere einer Fahrbahn zu erkennen. Wenn eine Relativbewegung festgestellt wird, kann zudem durch Auswertung von Bewegungsvektoren des optischen Flusses die Bewegungsrichtung des Nutzfahrzeugs vorwärts oder rückwärts festgestellt werden. Die entsprechenden Signale können dann in einem Fahrerassistenzsystem, zum Beispiel für eine optische Darstellung auf einem Display für den Fahrer oder für eine selbsttätige Bremsung verwertet werden.

Weiter werden Fahrerassistenzsysteme beansprucht, die Komponenten aufweisen, mit denen die vorstehenden Verfahrensmerkmale und Verfahrensschritte ausführbar sind.

Anhand einer Zeichnung wird die Erfindung weiter erläutert.

Es zeigen:
- Fig. 1: eine schematische Draufsicht auf ein Nutzfahrzeug-Gespann mit zwei schematischen Kamerabildern zur Ermittlung eines relativen Gierwinkels,
- Fig. 2: eine beispielhafte konkretere Darstellung des rechten oberen Kamerabildes aus Fig. 1,
- Fig. 3: eine Kamerabilddarstellung zur Ermittlung eines relativen Wankwinkels, und
- Fig. 4: ein Flussdiagramm zum Verfahren zur Ermittlung eines relativen Gierwinkels.

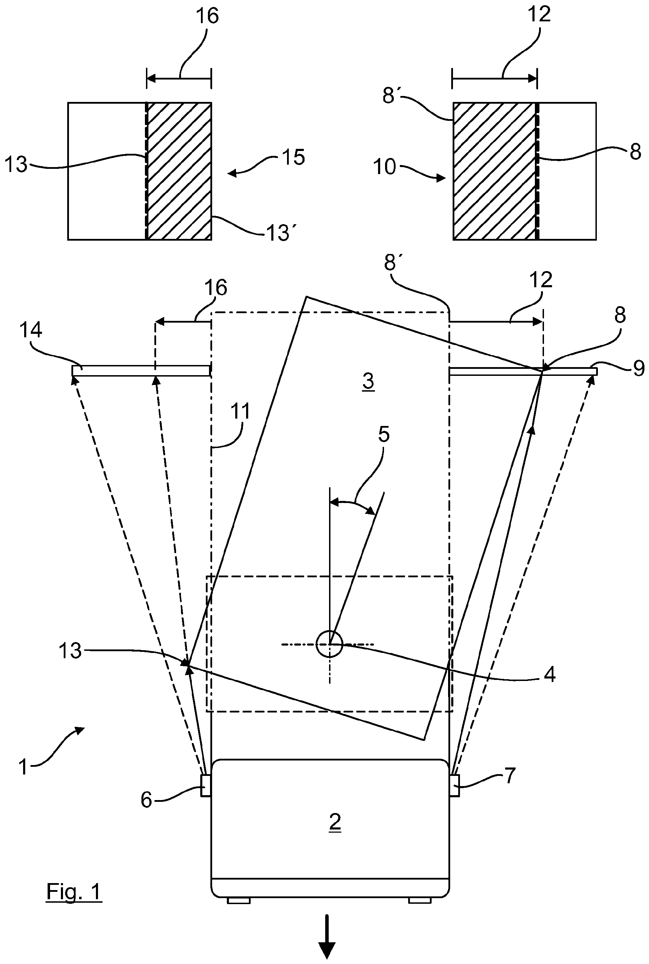

In Fig. 1 ist stark schematisiert eine Draufsicht auf ein Nutzfahrzeug-Gespann 1 aus einem Zugfahrzeug 2 und einem Auflieger 3 dargestellt.

Das Nutzfahrzeug-Gespann 1 befindet sich in einer Kurvenfahrt, wodurch der Auflieger 3 vom Zugfahrzeug 2 um den Aufliegerdrehpunkt 4 um einen relativen Gierwinkel als Knickwinkel 5 verschwenkt gezogen wird.

An beiden Längsseiten des Fahrerhauses ist am Zugfahrzeug 2 jeweils eine gleiche Kamera 6 und 7 angeordnet. Die Kameras 6, 7 sind so ausgerichtet, dass sie den Auflieger 3 in seinen unterschiedlichen Fahrstellungen im Seitenbereich erfassen. Das Nutzfahrzeug-Gespann 1 befindet sich hier in einer Linkskurve, so dass die, in Fahrzeug-Längsrichtung x gesehen, hintere vertikale Außenkante 8 des Aufliegers 3 fahrerseitig ausgeschwenkt ist und von der fahrerseitigen Kamera 7 erfasst wird. Dazu ist in einer Querebene durch die hintere vertikale Außenkante 8 schematisch ein virtuelles, vertikales Kamerabild 9 (oder Bildausschnitt) dargestellt, welches darüber als horizontales Kamerabild 10 in die Zeichenebene geklappt dargestellt ist.

Mit einer strichlierten Linie 11 ist der Auflieger 3 bei einer Geradeausfahrt bzw. bei einem längs ausgerichteten Nutzfahrzeug-Gespann 1 dargestellt. Bei diesem Fahrzustand würde die hintere vertikale Außenkante 8' von derfahrerseitigen Kamera 7 am linken Seitenrand der Kamerabilder 9 bzw. 10 gesehen und erfasst werden. Bei der dargestellten Kurvenfahrt liegt dagegen die hintere vertikale Außenkante 8 demgegenüber um die, in Fahrzeug-Querrichtung y gesehen, seitliche Verschiebestrecke 12 nach rechts versetzt im Kamerabild. Aus der Größe der variablen Verschiebestrecke 12 kann in Verbindung mit den unveränderlichen geometrischen Abmessungen, insbesondere der Anordnung und Ausrichtung der Kamera 7, der Lage des Aufliegerdrehpunkts 4 und der bekannten Abmessungen des Aufliegers 3, der Knickwinkel 5 berechnet und extrahiert werden.

In analoger Weise kann alternativ oder zusätzlich der Knickwinkel 5 auch durch eine Kantendetektion einer, in Fahrzeug-Längsrichtung x gesehen, vorderen vertikalen Außenkante 13 ermittelt werden. Dabei wird bei der dargestellten Kurvenfahrt die rechte vordere vertikale Außenkante 13 detektiert, welche beifahrerseitig ausschwenkt und durch die beifahrerseitige Kamera 6 erfasst wird. Für einen Vergleich mit dem vorbeschriebenen Kamerabild 9 ist hier in der selben vertikalen Querebene ein entsprechendes vertikales Kamerabild 14 dargestellt, der darüberliegend als horizontales Kamerabild 15 in die Zeichenebene geklappt ist. Auch hier ist die aktuellen Außenkantenposition 13 gegenüber der Lage der vorderen vertikalen Außenkante 13' bei einem längs ausgerichteten Nutzfahrzeug-Gespann um die Verschiebestrecke 16 versetzt. Aus der Größe der Verschiebestrecke 16 kann auch hier in Verbindung mit den bekannten Aufliegerabmessungen und der bekannten Lage des Aufliegerdrehpunkts 4 der jeweils zugeordnete aktuelle Knickwinkel 5 ermittelt werden.

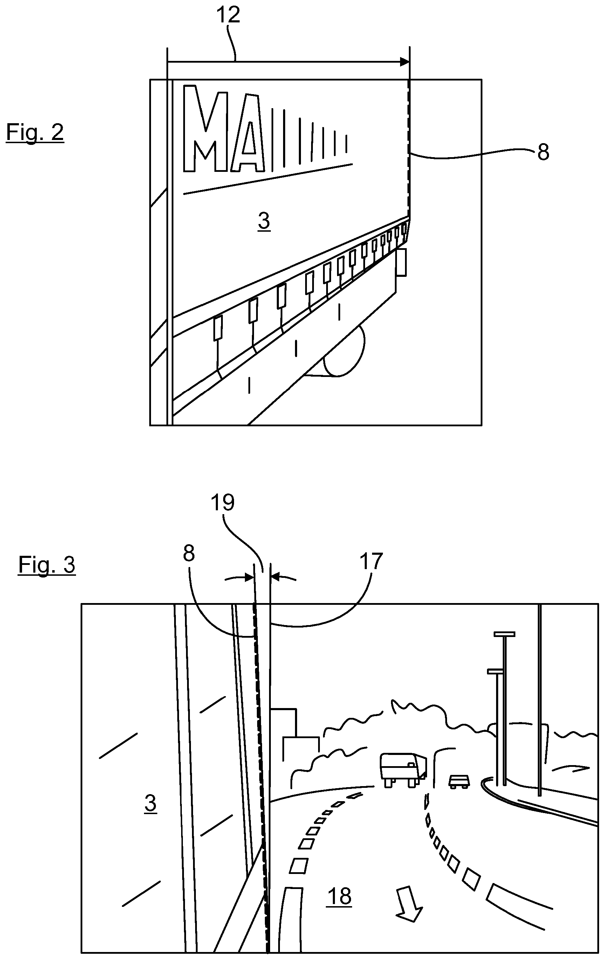

In Fig. 2 ist eine konkretere Darstellung des Kamerabilds 10 aus Fig. 1 wiedergegeben, aus der zu entnehmen ist, dass insbesondere eine, in Fahrzeug-Längsrichtung x gesehen, hintere vertikale Außenkante 8 im oberen Bereich des Aufliegers für die verwendeten Bildverarbeitungsalgorithmen zur Bestimmung des Knickwinkels 5 relevant ist.

In Fig. 3 ist ein Kamerabild der fahrerseitigen Kamera 7 gezeigt, bei dem die Position der hinteren vertikalen Außenkante 8 des Aufliegers 3 zur Ermittlung eines Wankwinkels des Aufliegers 3 ausgewertet wird. Dazu wird virtuell eine Lotsenkrechte 17 zur Bodenebene 18 quer zur hinteren vertikalen Außenkante 8 errichtet. Der sich ergebende Winkel zwischen der Außenkante 8 und der Lotsenkrechten 17 ist der aktuelle relative Wankwinkel 19.

Mit einer Kameraausrichtung entsprechend Fig. 3 oder einer noch weiter nach unten zur Fahrbahn ausgerichteten Kamera kann auch ein Fahrzeugstillstand und/oder eine geringe Rollgeschwindigkeit in Verbindung mit der Bewegungsrichtung vorwärts oder rückwärts durch eine Auswertung zum Beispiel des Kamerabilds nach Fig. 2 ermittelt werden. Mittels Bildverarbeitungsalgorithmen wird dabei der optische Fluss analysiert und es werden eine Relativbewegung oder ein Stillstand zwischen dem Nutzfahrzeug-Gespann und einem erfassten Hintergrund, insbesondere der Fahrbahn 18 einschließlich der Bewegungsrichtung erkannt.

Die ermittelten Informationen zu den fahrdynamischen Zuständen des Knickwinkels, des Wankwinkels und eines Gespannstillstands oder Wegrollens können in entsprechenden Fahrerassistenzsystemen zu Warnsignalen für den Fahrer und/oder zu selbsttätigen Fahreingriffen für eine Fahrstabilisierung verwendet werden.

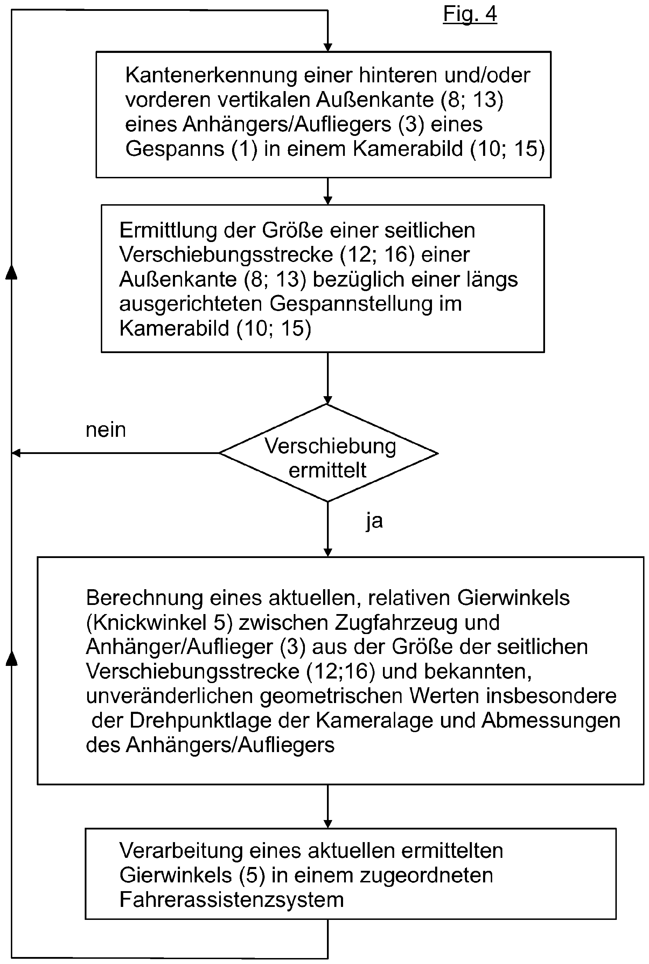

In Fig. 4 ist beispielhaft ein Flussdiagramm für das anhand von Fig. 1 erläuterte Verfahren zur Bestimmung des relativen Gierwinkels bzw. Knickwinkels 5 angegeben:
In einem ersten Verfahrensschritt erfolgt eine Kantenerkennung einer, in Fahrzeug-Längsrichtung x gesehen, hinteren und/oder vorderen vertikalen Außenkante 8, 13 des Aufliegers 3 des Gespannes 1 in einem Kamerabild 10, 15. In einem nächsten Verfahrensschritt wird die Größe einer, Fahrzeug-Querrichtung y gesehen, seitlichen Verschiebungsstrecke 12, 16 einer Außenkante 8, 13 bezüglich einer längs ausgerichteten Gespannstellung im Kamerabild 10, 15 ermittelt. In der nachfolgenden Entscheidungsraute wird festgestellt, ob eine solche Verschiebungsstrecke 12, 16 vorliegt: Wenn nicht, ist das Gespann längs ohne Knickwinkel ausgerichtet. Wenn eine Verschiebungsstrecke 12, 16 ermittelt wird, wird damit ein aktueller relativer Gierwinkel (Knickwinkel) unter Verwendung der bekannten unveränderlichen Lagen und Abmessungen der Kameras, des Drehpunkts und des Aufliegers berechnet. In einem letzten Verfahrensschritt werden die aktuell ermittelten Gierwinkelwerte in einem zugeordneten Fahrerassistenzsystem für eine weitere Verwendung zur Verfügung gestellt.

### Bezugszeichenliste

- 1: Nutzfahrzeug-Gespann
- 2: Zugfahrzeug
- 3: Auflieger
- 4: Auflieger-Drehpunkt
- 5: Knickwinkel (relativer Gierwinkel)
- 6: Kamera
- 7: Kamera
- 8, 8': hintere, vertikale Außenkante
- 9: vertikales Kamerabild
- 10: horizontales Kamerabild
- 11: strichlierte Linie
- 12: Verschiebestrecke
- 13, 13': vordere, vertikale Außenkante
- 14: vertikales Kamerabild
- 15: horizontales Kamerabild
- 16: Verschiebestrecke
- 17: Lotsenkrechte
- 18: Bodenebene
- 19: relativer Wankwinkel

## Patentansprüche

1. Verfahren zur Ermittlung fahrdynamischer Zustände eines Nutzfahrzeugs, wobei aus dem Kamerabild (10, 15) wenigstens einer Kamera (6, 7) des Nutzfahrzeugs mittels einer Bildverarbeitungsvorrichtung wenigstens eine fahrdynamische Information über das Nutzfahrzeug extrahiert wird,
wobei eine Information der relative Wankwinkel (19) eines Anhängers/Aufliegers (3) ist und dieser dergestalt ermittelt wird,
dass eine, in Fahrzeug-Längsrichtung (x) gesehen, hintere und/oder vordere vertikale Außenkante (8) eines Anhänger/Aufliegers (3) von mindestens einer je Fahrzeugseite, in Fahrzeug-Längsrichtung (x) gesehen, nach hinten gerichteten Kamera (7) erfasst wird,
**dadurch gekennzeichnet, dass** eine Lotsenkrechte (17) zur Bodenebene (18) bestimmt wird, und
dass in einer Winkelauswertung der aktuelle, relative Wankwinkel (19) als Winkel zwischen der Lotsenkrechten (17) und der hinteren und/oder vorderen vertikalen Außenkante (8) des Anhängers/Aufliegers (3) bestimmt wird.

2. Verfahren nach Anspruch 1, **dadurch gekennzeichnet, dass** wenigstens eine Kamera (6, 7) am Zugfahrzeug (2) eines Nutzfahrzeug-Gespanns (1) angebracht ist, und die Ausrichtung der wenigstens einen Kamera (6, 7) so gewählt ist, dass ein Anhänger/Auflieger (3) zumindest in wenigstens einem Teil der möglichen Fahrstellungen zumindest teilweise im Kamerabild (10, 15) erfasst wird.

3. Verfahren nach Anspruch 1 oder 2, **dadurch gekennzeichnet,**
**dass** aus einer bekannten Einbauposition und Ausrichtung einer am Zugfahrzeug (2), insbesondere am Fahrerhaus angeordneten Kamera (6, 7) die Lage der Lotsenkrechten (17) zur Bodenebene (18) bestimmt wird, wobei gegebenenfalls ein Wanken des Fahrerhauses festgestellt und korrigierend berücksichtigt wird, und/oder dass die Bodenebene (18) bestimmt wird, insbesondere mittels einer Stereokamera.

4. Fahrerassistenzsystem zur Ermittlung fahrdynamischer Zustände eines Nutzfahrzeugs, wobei aus dem Kamerabild (10, 15) wenigstens einer Kamera (6, 7) des Nutzfahrzeugs mittels einer Bildverarbeitungsvorrichtung wenigstens eine fahrdynamische Information über das Nutzfahrzeug extrahierbar ist,
wobei eine Information ein relativer Wankwinkel (19) eines Anhängers/Aufliegers (3) ist und dieser dergestalt ermittelbar ist,
dass eine, in Fahrzeug-Längsrichtung (x) gesehen, hintere und/oder vordere vertikale Außenkante (8) eines Anhänger/Aufliegers (3) von mindestens einer je Fahrzeugseite, in Fahrzeug-Längsrichtung (x) gesehen, nach hinten gerichteten Kamera (7) erfassbar ist,
**dadurch gekennzeichnet, dass** eine Lotsenkrechte (17) zur Bodenebene (18) bestimmbar ist,
dass in einer Winkelauswertung der aktuelle, relative Wankwinkel (19) als Winkel zwischen der Lotsenkrechten (17) und der hinteren und/oder vorderen vertikalen Außenkante (8) des Anhängers/Aufliegers (3) bestimmbar ist.

5. Fahrerassistenzsystem nach Anspruch 4, **dadurch gekennzeichnet,**
**dass** damit aus einer bekannten Einbauposition und Ausrichtung einer am Zugfahrzeug (2), insbesondere am Fahrerhaus angeordneten Kamera (6, 7) die Lage der Lotsenkrechten (17) zur Bodenebene (18) bestimmbar ist, wobei gegebenenfalls ein Wanken des Fahrerhauses feststellbar und korrigierend berücksichtigbar ist, und/oder dass die Bodenebene (18) mittels einer Stereokamera bestimmbar ist.

6. Fahrzeug, insbesondere Nutzfahrzeug, zur Durchführung eines Verfahrens nach einem der Ansprüche 1 bis 3 und/oder mit einem Fahrerassistenzsystem nach einem der Ansprüche 4 oder 5.

## Claims

1. Method for determining dynamic driving states of a commercial vehicle, wherein at least one item of dynamic driving information about the commercial vehicle is extracted from the camera image (10, 15) from at least one camera (6, 7) of the commercial vehicle by means of an image processing device,
wherein an item of information is the relative roll angle (19) of a trailer/semitrailer (3) and the latter is determined in such a way
that a rear and/or front vertical outer edge (8) of a trailer/semitrailer (3), seen in the vehicle longitudinal direction (x), is detected by at least one rearward-facing camera (7) on each side of the vehicle, seen in the vehicle longitudinal direction (x),
**characterized in that**
a perpendicular (17) to the ground plane (18) is determined, and
**in that** in an angular evaluation, the current, relative roll angle (19) is determined as the angle between the perpendicular (17) and the rear and/or front vertical outer edge (8) of the trailer/semitrailer (3).

2. Method according to Claim 1, **characterized in that** at least one camera (6, 7) is attached to the towing vehicle (2) of a commercial vehicle combination (1), and the alignment of the at least one camera (6, 7) is chosen such that a trailer/semitrailer (3) is at least partly detected in the camera image (10, 15), at least in at least some of the possible driving positions.

3. Method according to Claim 1 or 2, **characterized in that** the position of the perpendicular (17) to the ground plane (18) is determined from a known installation position and alignment of a camera (6, 7) arranged on the towing vehicle (2), in particular on the driver's cab, wherein rolling of the driver's cab can be detected and taken into account in a corrective manner, and/or in that the ground plane (18) is determined, in particular by means of a stereo camera.

4. Driver assistance system for determining dynamic driving states of a commercial vehicle, wherein at least one item of dynamic driving information about the commercial vehicle can be extracted from the camera image (10, 15) from at least one camera (6, 7) of the commercial vehicle by means of an image processing device,
wherein an item of information is a relative roll angle (19) of a trailer/semitrailer (3) and the latter can be determined in such a way
that a rear and/or front vertical outer edge (8) of a trailer/semitrailer (3), seen in the vehicle longitudinal direction (x), can be detected by at least one rearward-facing camera (7) on each side of the vehicle, seen in the vehicle longitudinal direction (x),
**characterized in that**
a perpendicular (17) to the ground plane (18) can be determined,
**in that** in an angular evaluation, the current, relative roll angle (19) can be determined as the angle between the perpendicular (17) and the rear and/or front vertical outer edge (8) of the trailer/semitrailer (3).

5. Driver assistance system according to Claim 4, **characterized in that** the position of the perpendicular (17) to the ground plane (18) can be determined therewith from a known installation position and alignment of a camera (6, 7) arranged on the towing vehicle (2), in particular on the driver's cab, wherein rolling of the driver's cab can be detected and taken into account in a corrective manner, and/or
**in that** the ground plane (18) can be determined by means of a stereo camera.

6. Vehicle, in particular commercial vehicle, for carrying out a method according to one of Claims 1 to 3 and/or having a driver assistance system according to either of Claims 4 and 5.

## Revendications

1. Procédé permettant d'établir des états dynamiques de conduite d'un véhicule utilitaire, dans lequel au moins une information de dynamique de conduite concernant le véhicule utilitaire est extraite à partir de l'image de caméra (10, 15) d'au moins une caméra (6, 7) du véhicule utilitaire, au moyen d'un dispositif de traitement d'image,
une information étant l'angle de roulis relatif (19) d'une remorque/semi-remorque (3), et celui-ci étant établi de telle sorte qu'un bord extérieur vertical (8), arrière et/ou avant, vu dans la direction longitudinale du véhicule (x), d'une remorque/semi-remorque (3) est détecté par au moins une caméra (7) par côté de véhicule, tournée vers l'arrière, vue dans la direction longitudinale du véhicule (x),
**caractérisé en ce qu'**une verticale (17) par rapport au plan du sol (18) est déterminée, et
**en ce que** dans une évaluation d'angle, l'angle de roulis relatif (19) actuel est déterminé comme l'angle entre la verticale (17) et le bord extérieur vertical (8), arrière et/ou avant, de la remorque/semi-remorque (3).

2. Procédé selon la revendication 1, **caractérisé en ce qu'**au moins une caméra (6, 7) est installée sur le véhicule tracteur (2) d'un attelage de véhicule utilitaire (1), et l'alignement de ladite au moins une caméra (6, 7) est choisi de telle sorte qu'une remorque/semi-remorque (3) est détectée au moins partiellement sur l'image de caméra (10, 15) au moins dans au moins une partie des positions de conduite possibles.

3. Procédé selon la revendication 1 ou 2, **caractérisé en ce qu'**à partir d'une position d'installation et d'un alignement connus d'une caméra (6, 7) disposée sur le véhicule tracteur (2), en particulier au niveau de la cabine, la position de la verticale (17) par rapport au plan du sol (18) est déterminée, un roulis de la cabine étant le cas échéant constaté et pris en compte en le corrigeant, et/ou
**en ce que** le plan du sol (18) est déterminé, en particulier au moyen d'une caméra stéréo.

4. Système d'assistance au conducteur permettant d'établir des états dynamiques de conduite d'un véhicule utilitaire, dans lequel au moins une information dynamique de conduite concernant le véhicule utilitaire peut être extraite à partir de l'image de caméra (10, 15) d'au moins une caméra (6, 7) du véhicule utilitaire, au moyen d'un dispositif de traitement d'image,
une information étant un angle de roulis relatif (19) d'une remorque/semi-remorque (3), et celui-ci pouvant être établi de telle sorte qu'un bord extérieur vertical (8), arrière et/ou avant, vu dans la direction longitudinale du véhicule (x), d'une remorque/semi-remorque (3) est détecté par au moins une caméra (7) par côté de véhicule, tournée vers l'arrière, vue dans la direction longitudinale du véhicule (x),
**caractérisé en ce qu'**une verticale (17) par rapport au plan du sol (18) peut être déterminée,
**en ce que** dans une évaluation d'angle, l'angle de roulis relatif (19) actuel peut être déterminé comme l'angle entre la verticale (17) et le bord extérieur vertical (8), arrière et/ou avant, de la remorque/semi-remorque (3).

5. Système d'assistance au conducteur selon la revendication 4, **caractérisé en ce qu'**à partir d'une position d'installation et d'un alignement connus d'une caméra (6, 7) disposée sur le véhicule tracteur (2), en particulier au niveau de la cabine, la position de la verticale (17) par rapport au plan du sol (18) peut être déterminée, un roulis de la cabine pouvant le cas échéant être constaté et pris en compte en le corrigeant, et/ou
**en ce que** le plan du sol (18) peut être déterminé au moyen d'une caméra stéréo.

6. Véhicule, en particulier véhicule utilitaire, destiné à l'exécution d'un procédé selon l'une quelconque des revendications 1 à 3, et/ou comprenant un système d'assistance au conducteur selon l'une quelconque des revendications 4 ou 5.
